# EUROPÄISCHE PATENTSCHRIFT

(11) **EP 0 564 758 B1**
(45) Veröffentlichungstag und Bekanntmachung des Hinweises auf die Patenterteilung: **13.12.1995**
(21) Anmeldenummer: 92890195.8
(22) Anmeldetag: 17.09.1992
(51) Int. Cl.: C03B 33/023, C03B 33/033

(54) **Verfahren und Vorrichtung zum Zerteilen von Glastafeln in Zuschnitte**
Method and apparatus for dividing glass sheets into parts
Procédé et appareil pour diviser des plaques en verre en parties

(30) Priorität: 06.04.1992 AT 715/92
(43) Veröffentlichungstag der Anmeldung: 13.10.1993
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 340 199
- DE-A- 1 813 672
- DE-A- 2 518 243
- US-A- 2 948 991
- US-A- 4 109 841

## Beschreibung

Die Erfindung betrifft ein Verfahren und eine Vorrichtung zum Zerteilen von Glastafeln in Zuschnitte mit der gewünschten Form und Größe.

Glasschneidetische sind in verschiedenen Ausführungsformen bekannt. In diesem Zusammenhang kann auf die EP-A-457 751, die DE-PS 39 06 292, die DE-OS 19 57 601, die US-PS 3 979 243 und den Aufsatz "Glasschneideanlagen ..." in Österr. Glaserzeitung, Heft 4/1972, Seiten 19 bis 21 hingewiesen werden.

Außer den Glasschneidetischen, in welchen die Glastafeln entsprechend der Form und Größe der gewünschten Zuschnitte geritzt werden, sind auch Vorrichtungen zum Brechen von auf Glasschneidetischen einseitig geritzten Glastafeln (sog. "Brechtische") bekannt, auf welchen die Glastafeln mit Hilfe von Hebeleisten oder an die Glastafel anlegbaren Niederhaltern und Widerlagern entlang der Ritzlinien geteilt werden, bekannt. Beispielsweise kann auf die DE-OS 19 57 601, die DE-OS 34 28 863, die US-PS 35 70 734, die US-PS 36 68 955 und die US-PS 32 53 756 verwiesen werden. Ein weiteres Beispiel für eine Vorrichtung zum Brechen von Glastafeln ist in der DE-A-1 813 672 oder der EP-A-340 199 beschrieben.

Auf den Glasschneidetischen werden die von der Glasfabrik angelieferten, großen Glastafeln entsprechend den gewünschten Zuschnitten meist nach einer mit einem Rechner ermittelten Optimierung geritzt. Dabei ist es in der Regel notwendig, auf den Glastafeln sog. Nullinien einzuritzen, um definierte und saubere Kanten der an den Rändern der Glastafeln liegenden Zuschnitte zu erhalten.

Die außerhalb der Nullschnitte liegenden Randstreifen der Glastafeln wurden für gewöhnlich von Hand aus abgebrochen und erst dann mit dem eigentlichen Brechen der Glastafeln zunächst in X-Richtung (quer zur Förderrichtung) und dann in Y-Richtung (in Transportrichtung) begonnen.

Der Erfindung liegt die Aufgabe zugrunde, ein Verfahren und eine Vorrichtung anzugeben, mit welcher das Abtrennen von Randstreifen entlang der den Nullinien entsprechenden Ritzlinien in das übliche Zerteilen von Glastafeln und in hierfür vorgesehene Vorrichtungen problemlos integriert werden kann.

Erfindungsgemäß wird diese Aufgabe bei einem Verfahren der eingangs genannten Gattung gelöst, indem die folgenden Verfahrensschritte ausgeführt werden:
Ritzen der Glastafeln, wobei neben den die Zuschnitte definierenden Ritzlinien wenigstens zwei zueinander senkrecht stehende Nullschnittritzlinien im Bereich von wenigstens zwei zu einer Ecke zusammenlaufenden Rändern der Glastafel erzeugt werden, Fördern der so geritzten Glastafel auf einen Brechtisch, Abbrechen des wenigsten einen Randstreifens entlang der quer zur Förderrichtung laufenden Nullschnittlinie, Teilen der Glastafel entlang der quer zur Förderrichtung laufenden Ritzlinien (X-Schnitt), gegebenenfalls Weiterfördern der einzelnen so erhaltenen, parallel zur Förderrichtung ausgerichtete Ritzlinien aufweisenden Glasstreifen, Abbrechen der wenigstens einen Randleiste entlang der parallel zur Förderrichtung verlaufenden Nullschnittlinie, Teilen der so erhaltenen Glasstreifen entlang der in Förderrichtung verlaufenden Ritzlinien (Y-Schnitte), gegebenenfalls nachdem die Glasstreifen zu einem weiteren Abschnitt des Brechtisches bewegt worden sind.

Vorteilhafte und bevorzugte Ausgestaltungen des erfindungsgemäßen Verfahrens sind Gegenstand der von Anspruch 1 abhängigen Unteransprüche.

Zum Durchführen des erfindungsgemäßen Verfahrens kann eine Vorrichtung mit einem (ggf. in mehrere Abschnitte unterteilten) Glasbrechtisch im Anschluß an einen Glasschneidetisch auf mit Fördermitteln zum Transportieren geritzter Glastafeln und den Glasbrechtisch und mit Einrichtungen zum Teilen der Glastafeln entlang der in Förderrichtung und quer zur Förderrichtung verlaufenden Ritzlinien verwendet werden, die sich dadurch auszeichnet, daß ein Randabbrechwerkzeug zum Abtrennen des wenigstens einen Randstreifens entlang der senkrecht zur Förderrichtung verlaufenden, dem Nullschnitt entsprechenden Ritzlinie vorgesehen ist, daß an wenigstens einem Längsrand des Glasbrechtisches ein weiteres Randabbrechwerkzeug zum Abtrennen des wenigstens einen Randstreifens entlang der parallel zur Förderrichtung verlaufenden, dem Nullschnitt entsprechenden Ritzlinie vorgesehen ist, daß jedes der Werkzeuge zum Abtrennen der Randstreifen ein von unten her im Bereich der Ritzlinie an die Glastafel bzw. den Glasstreifen anlegbares Widerlager und zwei von oben her an die Glastafel bzw. den Glasstreifen anlegbare Niederhalter aufweist, und daß der im Bereich des abzutrennenden Randstreifens anlegbare Niederhalter gegenüber dem anderen Niederhalter des Werkzeuges absenkbar ist, um den abzutrennenden Randstreifen zu verwinden.

Vorteilhafte und bevorzugte Ausgestaltungen der erfindungsgemäßen Vorrichtung sind Gegenstand der von Anspruch 8 abhängigen Unteransprüche.

Mit dem erfindungsgemäßen Verfahren und mit der erfindungsgemäßen, zum Durchführen desselben vorgeschlagenen Vorrichtung können vor dem Zerteilen ("Brechen") der Glastafel entlang der quer zur Förderrichtung verlaufenden Ritzlinien die Randstreifen mit dem ersten Randabbrechwerkzeug entlang der, wenigstens einen quer zur Förderrichtung verlaufenden Nullinie entsprechenden Ritzlinie problemlos abgetrennt werden, ohne den Verfahrensablauf zu stören. Darauf wird die Glastafel durch Brechen entlang der in X-Richtung verlaufenden Ritzlinien in Glasstreifen geteilt und diese einzeln auf den nach der Einrichtung zum Teilen der Glastafel (z.B. der Brechleiste) liegenden Teil des Brechtisches gefördert. Das zweite Randabbrechwerkzeug (oder falls vorgesehen die zwei Randabbrechwerkzeuge) wird betätigt, nachdem ein Glasstreifen auf den zweiten Teil des Brechtisches transportiert worden ist, um Randstreifen entlang des an diesem Glasstreifen verbliebenen Teils der Ritzlinie(n) entsprechend der in Förderrichtung verlaufenden Nullinie(n) abzutrennen. Darauf wird der Glasstreifen, in dem sich nur noch in Förderrichtung verlaufende Ritzlinien befinden, weitergefördert und auf den Teil des Brechtisches transportiert, auf dem der Glas- streifen entlang dieser in Förderrichtung verlaufenden Ritzlinien in die einzelnen Zuschnitte aufgeteilt wird. Diese Zuschnitte werden dann vom Brechtisch wegtransportiert, oder falls vorgesehen und benötigt, zu einem weiteren Abschnitt des Brechtisches transportiert, in dem entlang schräg zur Förderrichtung verlaufender Ritzlinien gebrochen wird.

Weitere Einzelheiten und Vorteile sowie Merkmale des erfindungsgemäßen Verfahrens und der erfindungsgemäßen Vorrichtung ergeben sich aus der nachstehenden Beschreibung, in der auf die angeschlossenen Zeichnungen, die Ausführungsbeispiele der Erfindung zeigen, Bezug genommen wird. Es zeigt:
Fig. 1 in Draufsicht einen Teil eines Glasbrechtisches,
Fig. 2 vom Brechtisch aus, d.h. von links der Fig. 1 aus gesehen das Werkzeug zum Abtrennen von Randstreifen entlang der quer zur Förderrichtung verlaufenden Nullinien,
Fig. 3 entgegen der Förderrichtung (von unten der Fig. 1) aus gesehen das Werkzeug zum Abtrennen von Randstreifen entlang der in Förderrichtung verlaufenden Nullinien,
Fig. 4 eine Glastafel mit Ritzlinien,
Fig. 5 eine Einrichtung zum Brechen von Glasstreifen entlang in Förderrichtung verlaufender Ritzlinien,
Fig. 6 ein Ausführungsbeispiel einer erfindungsgemäßen Anlage zum Zerteilen von Glastafeln, der abgabeseitig eine Einrichtung zum Abstapeln von Glaszuschnitten zugeordnet ist,
Fig. 7 eine Vorrichtung zum Drehen von Glaszuschnitten,
Fig. 8 die Vorrichtung aus Fig. 7 in Seitenansicht und
Fig. 9 die Vorrichtung aus Fig. 7 in Draufsicht.

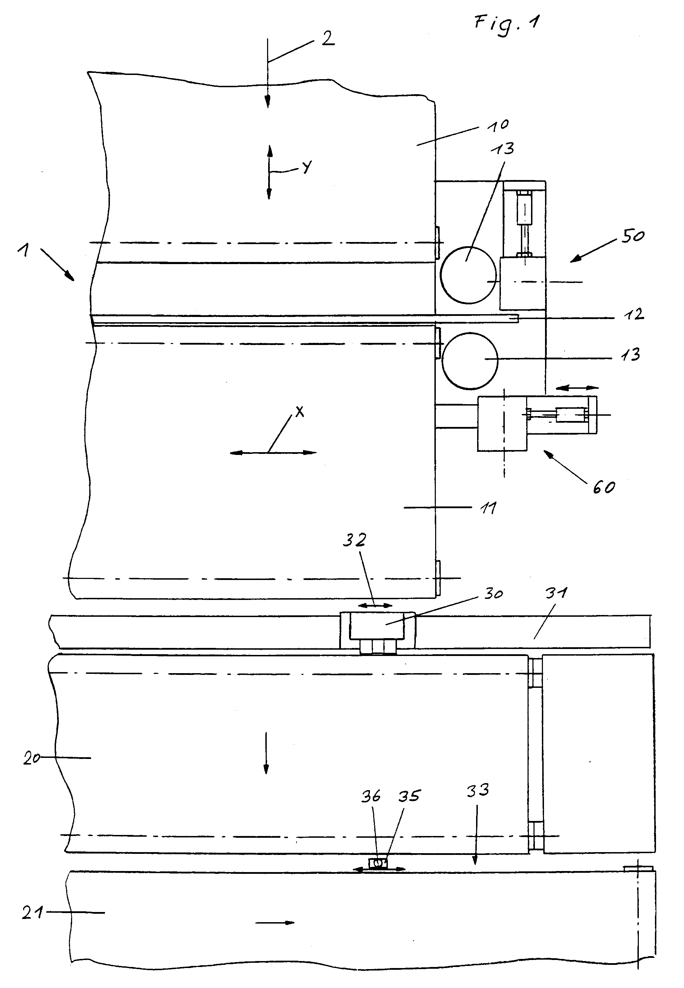

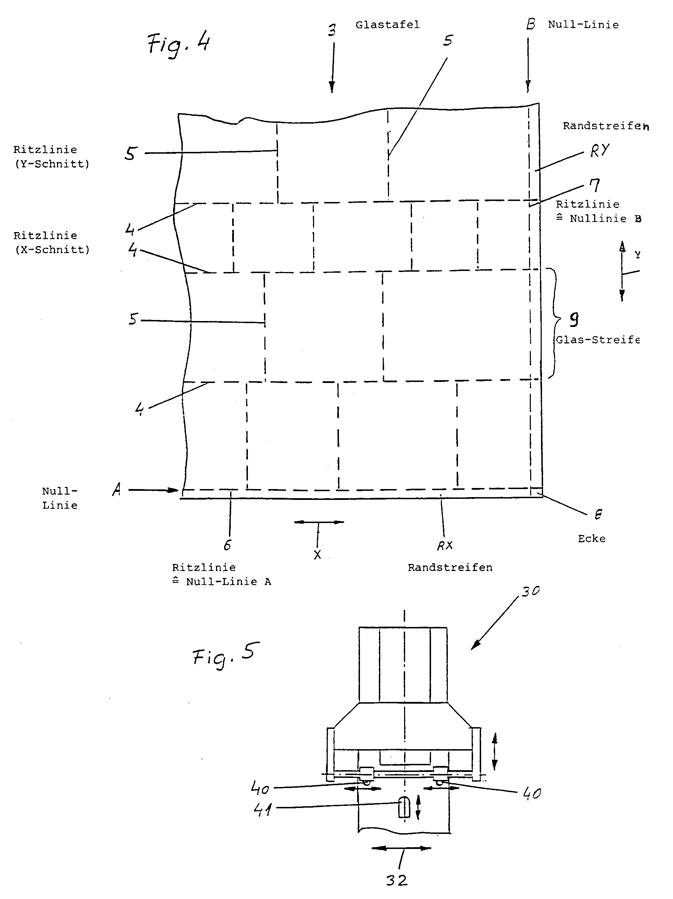

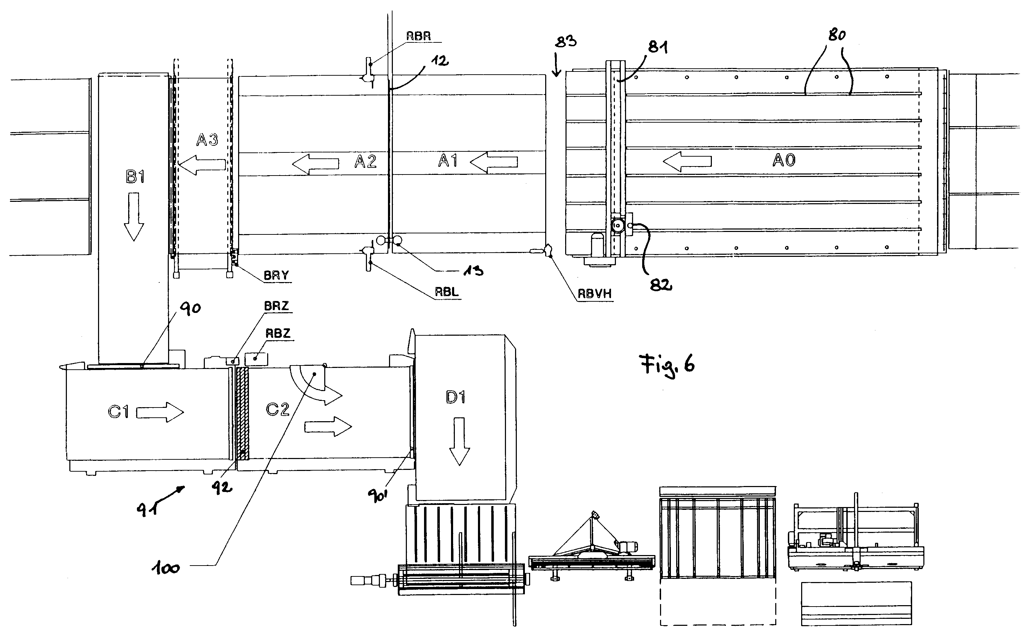

Von einem Glasschneidetisch A0 (Fig. 6) werden Glastafeln 3, die beispielsweise die in Fig. 4 gezeigte und am Glasschneidetisch A0 erzeugte Anordnung von Ritzlinien 4, 5, 6 und 7 aufweisen, in Förderrichtung 2 auf den in Fig. 1 teilweise gezeigten Brechtisch 1 transportiert. Dabei kann zum Transport von geritzten Glastafeln 3 der Glasschneidetisch so wie in der EP-B-192 920 beschrieben, ausgebildet sein, oder wie in Fig. 6 gezeigt, über die Oberseite des Glassschneidetisches A0 anhebbare Förderbänder 80 aufweisen. Zusätzlich oder alternativ kann der Glasschneidetisch A0 als Luftkissentisch ausgebildet sein.

Die in Förderrichtung 2 (Y-Richtung) auf den Brechtisch 1 transportierte Glastafel 3 besitzt neben den in X-Richtung (quer zur Förderrichtung 2) verlaufenden Ritzlinien 4 und den in Y-Richtung (in Förderrichtung 2) verlaufenden Ritzlinien 5 noch wenigstens eine der Nullinie A entsprechende und in X-Richtung verlaufende Ritzlinie 6 und eine der wenigstens einen Nullinie B entsprechende und in Y-Richtung verlaufende Ritzlinie 7, die in einer Ecke 8 der Glastafel 3 aufeinander treffen.

Zum Transport von geritzten Glastafeln 3 auf den Brechtisch 1 bzw. zum Unterstützen des Transportes bei Verwendung des Glasschneidetisches gemäß der EP-B-192 920 sind die Stützflächen 10 und 11 (A1, A2 in Fig. 6) des Glasbrechtisches 1 als sich in Förderrichtung 2 bewegende Endlosförderbänder ausgebildet. Diese Endlosförderbänder 10, 11 können ebenso wie alle anderen Förderbänder (z.B. 20, 21) als luftdurchlässige Bänder ausgebildet sein, damit eine zu bearbeitende Glastafel 3 auf ihnen durch Anlegen von Unterdruck durch das luftdurchlässige Förderband 10 bzw. 11 (oder z.B. 20, 21) hindurch auf dem Brechtisch in der gewünschten Position festgelegt werden kann, wenn das Förderband stillsteht bzw. verhindert werden kann, daß die Glastafeln, Glasstreifen oder Glaszuschnitte beim Transport gegenüber den Förderbändern verrutschen (insbesondere beim Abbremsen und/oder Beschleunigen) (vgl. bezüglich der Konstruktion solcher Förderbänder hiezu auch die FR-PS 2 484 393).

Zwischen den beiden von den Förderbändern 10 und 11 gebildeten Teilen des Brechtisches 1 ist zum Brechen der X-Schnitte (Ritzlinien 4) eine Brechleiste 12 vorgesehen, die beispielsweise wie aus der EP-A-457 751 bekannt ausgebildet sein kann. So kann die Brechleiste 12 im Bereich des in Fig. 1 gezeigten, bezogen auf die Förderrichtung 2 linken Randes (rechts in Fig. 1) höher ausgebildet sein als am in Fig. 1 nicht sichtbaren, anderen Ende. Die Brechleiste 12 besitzt somit eine von rechts der Fig. 1 nach links schräg abfallende, obere Kante.

Zum Niederhalten der beiderseits der Brechleiste 12 befindlichen Teile der Glastafel 3, wenn diese entlang der Ritzlinien 4 in Glasstreifen 9 zerteilt wird, sind Sauger 13 und alternativ zu diesen betätigbare Niederhalter 14 vorgesehen. Die Sauger 13 werden verwendet, wenn beispielsweise Glastafeln 3 mit einer Metallbeschichtung zu teilen sind. Auch Niederhalter der aus der EP-A-475 751 bekannten Konstruktion sind verwendbar.

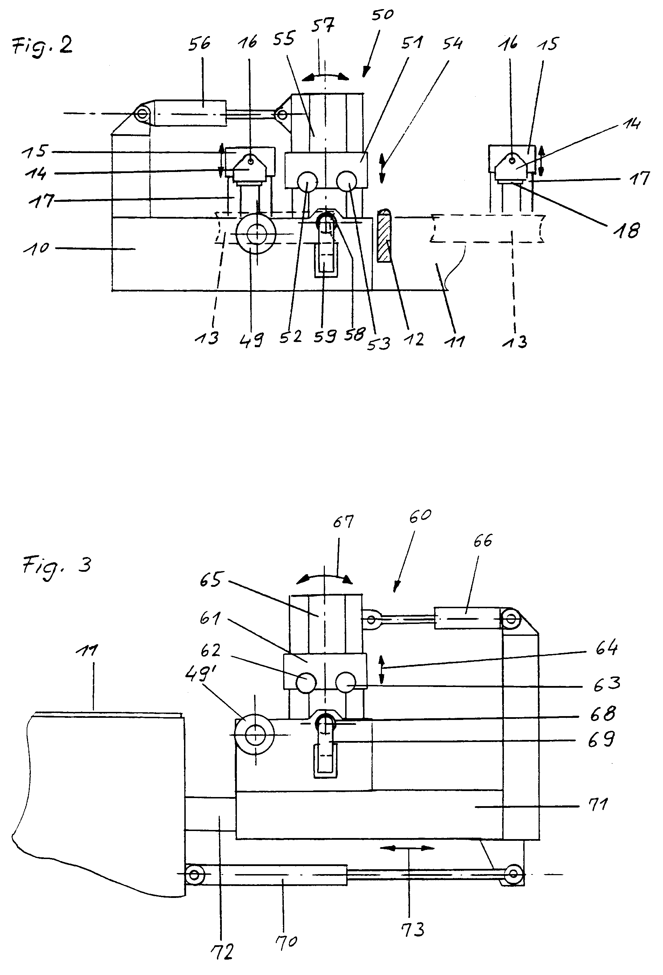

Die Niederhalter 14 sind in Trägern 15 um Achsen 16 verschwenkbar gelagert und können von Stangen 17 angehoben und abgesenkt werden. Die an der Glastafel 3 anzulegenden Teile der Niederhalter 14 sind beispielsweise zylindrische Kunststoffleisten 18, deren Achsen sich parallel zur Bildebene von Fig. 2 erstrecken.

Bezogen auf die Förderrichtung 2 sind nach dem vom Förderband 11 gebildeten Teil des Brechtisches 1 weitere Teile des Brechtisches vorgesehen, die von einem sich in Förderrichtung 2 bewegenden Förderband 20 und von einem sich quer zur Förderrichtung 2 bewegenden Förderband 21 gebildet werden.

Zwischen dem Förderband 11 und dem Förderband 20 ist ein Freiraum (Spalt) vorgesehen, in dem eine Einrichtung 30 zum Zerteilen der Glasstreifen 9, wie sie nach dem Aufteilen der Glastafeln 3 entlang der Ritzlinien 4 erhalten werden, d.h. zum Brechen der Y-Schnitte (Ritzlinien 5), vorgesehen ist. Die Einrichtung 30 ist auf einer Führungsbahn 31 in Richtung des Doppelpfeiles 32, d.h. parallel zur X-Richtung verfahrbar, um sie gegenüber den Ritzlinien 5 in den Glasstreifen 9 auszurichten.

Mit der Einrichtung 30 bzw. mit ihrem Antrieb gekuppelt (z.B. auf einem gemeinsamen Träger montiert) und daher synchron mit dieser bewegbar, ist in einem Spalt 33 zwischen den Förderbändern 20 und 21 eine Hebenocke 35 vorgesehen, deren zylinderförmig mit abgerundetem Vorderende ausgebildeter, z.B. aus Kunststoff bestehender Teil 36 aus einer Bereitschaftslage unter der oberen Fläche der Förderbänder 20 und 21 in eine über diese vorragende Stellung angehoben werden kann.

Die Einrichtung 30 kann beispielsweise den in Fig. 5 gezeigten grundsätzlichen Aufbau besitzen. Sie besitzt zwei heb- und senkbare, von oben her an den zu teilenden Glasstreifen 9 anlegbare Niederhalter 40 und ein von unten her im Bereich der Ritzlinie 5, entlang welcher der Glasstreifen 9 zu teilen ist, anlegbares Widerlager 41. Sowohl die Niederhalter 40 als auch das Widerlager 41 sind als zylinderförmige Kunststoffleisten ausgebildet, die mit einer Erzeugenden an der Oberseite bzw. Unterseite der Glasstreifen 9 anliegen.

Der Abstand der Niederhalter 40 voneinander ist veränderbar, so daß die auf den Glasstreifen 9 einwirkenden Kräfte verändert werden können. Dabei wird bei dickerem Glas der Abstand der Niederhalter 40 voneinander größer gewählt als bei dünnerem Glas.

Beim Brechen von Glasstreifen 9 mit Hilfe der Einrichtung 30 wird das Widerlager 41 über die Oberfläche des Förderbandes 20 angehoben, um so einen sicheren Verlauf des Bruches entlang der Ritzlinie 5 zu erzielen. Auch das Ausmaß des Anhebens des Widerlagers 41 über die Oberseite des Förderbandes 20, wenn ein Y-Schnitt (Ritzlinie 5) gebrochen wird, wird abhängig von der Glasdicke gewählt. Dabei wird bei dickerem Glas weniger weit angehoben als bei dünnerem Glas.

Die im Schlitz 33 zwischen den Förderbändern 20 und 21 vorgesehene Hebenocke 35 ist freilich nur wirksam, wenn sich die Ritzlinie 5, entlang welcher ein Glasstreifen 9 zu teilen ist, bis auf das Förderband 21 erstreckt.

Wie bereits weiter oben angedeutet, sind am Brechtisch 1 Werkzeuge 50 und 60 zum Abbrechen der Randstreifen RX und RY (Fig. 4) vorgesehen. Dabei ist das Werkzeug 50 zum Abbrechen des Randstreifens RX entlang der der Nullinie A entsprechenden Ritzlinie 6, die am in Förderrichtung 2 gesehen vorderen und/- oder hinteren Rand der Glastafel 3 vorgesehen sein kann, bestimmt, wogegen das Randabbrechwerkzeug 60 zum Abtrennen der an Glassstreifen 9 verbleibenden Teile von Randstreifen RY (Randstreifen RY können an einem oder an beiden Seitenrändern der Glastafel 3 vorgesehen sein) entlang der der Nullinie B entsprechenden Ritzlinie 7 dient.

Das Randabbrechwerkzeug 50 besitzt beispielsweise den in Fig. 2 grundsätzlich gezeigten Aufbau. An einem Träger 51 sind zwei Niederhalteleisten 52, 53 (zylinderförmige Teile aus elastischem Kunststoff) vorgesehen. Diese Niederhalteleisten 52, 53 können durch Auf- und Abbewegen ihres Trägers 51 (Pfeil 54) beiderseits der Ritzlinie 6 an die Glastafel 3 angelegt werden. Der Teil 55 des Randabbrechwerkzeuges 50, an dem der Träger 51 verschiebbar geführt ist, ist mit Hilfe eines Druckmittelmotors 56 im Maschinengestell in Richtung des Doppelpfeiles 57 um eine zur Ritzlinie 6 parallele Achse verschwenkbar. Das Randabbrechwerkzeug 50 besitzt weiters ein ebenfalls als Kunststoffzylinder ausgebildetes Widerlager 58, das am freien Ende eines hebelförmigen Trägers 59 montiert ist. Durch Verschwenken des Hebels 59 mit Hilfe eines nicht gezeigten Druckmittelmotors um eine etwa parallel zur Förderrichtung 2 verlaufende Achse kann das Widerlager 58 von unten her im Bereich der Ritzlinie 6 an die Glastafel 3 angelegt werden.

Zum Abbrechen eines Randstreifens RX werden das Widerlager 58 und die beiden Niederhalter 52 und 53 von beiden Seiten (von unten bzw. von oben) her an die Glastafel 3 angelegt und dann der Teil 55 des Randabbrechwerkzeuges 50 durch Betätigen des Druckmittelmotors 56 verschwenkt, so daß sich der dem Rand der Glastafel 3 benachbarte, am Randstreifen RX anliegende Niederhalter 53 gegenüber dem anderen Niederhalter 52 nach unten bewegt und der Randstreifen RX verwunden wird. Dabei bricht die Glastafel 3 entlang der Ritzlinie 6 und der Randstreifen RX wird über die gesamte Breite der Glastafel 3 von dieser abgetrennt. Das Ausmaß des Verschwenkens des Teils 55 des Randabbrechwerkzeuges 50 kann in Abhängigkeit von der Breite der Glastafel und deren Dicke gewählt werden und wird für gewöhnlich größer gewählt, wenn die Ritzlinie 6 länger ist.

Im Bereich des Randabbrechwerkzeuges 50 ist noch eine maschinengestellfest montierte, drehbare Walze oder Rolle 49 vorgesehen, auf der die Glastafel 3 bzw. der dem Randabbrechwerkzeug 50 benachbarte Rand derselben geführt und gestützt wird, da dieser Rand über den seitlichen Rand der von den Förderbändern 10 und 11 gebildeten Teile des Glasbrechtisches 1 oder falls neben den Förderbändern 10 und 11 noch Filzflächen vorgesehen sind, über diese vorstehend in Richtung des Pfeiles 2 (Fig. 1) transportiert wird.

Nachdem so der Randstreifen RX abgetrennt worden ist, werden die Glastafeln 3 entlang der Ritzlinien 4 in einzelnen Glasstreifen 9 (Brechen der X-Schnitte) geteilt, indem die Hebeleiste 12 betätigt wird.

Die einzelnen Glasstreifen 9 werden durch Bewegen des Förderbandes 11 weiterbewegt, bis der bezogen auf die Förderrichtung 2 hintere Rand des Glasstreifens 9 zum Randabbrechwerkzeug 60, das zum Abtrennen der Randstreifen RY bestimmt ist, ausgerichtet ist. Dieses wird durch Betätigen des Druckmittelmotors 70 auf einer maschinengestellfesten Führungsschiene 72, auf welcher der Rahmen des Randabbrechwerkzeuges 60 geführt ist, quer zur Förderrichtung 2 verstellt bis es so ausgerichtet ist, daß das Widerlager 68 genau unter der Ritzlinie 7 angeordnet ist. Nun wird das Widerlager 68 durch Verschwenken des Hebels 69 von unten her an den Glasstreifen 9 angelegt und der Werkzeugteil 65 nach dem Anlegen der Niederhalter 62, 63 durch Betätigen des Druckmittelmotors 66 in Richtung des Doppelpfeiles 67 verschwenkt, um den Randstreifen RX zu verwinden und vom Glasstreifen 9 abzutrennen.

Nachdem dies ausgeführt worden ist, wird das Randabbrechwerkzeug 60 durch entsprechendes Betätigen des Druckmittelmotors 70 in seine vom Förderband 11 bzw. dem Rand des Brechtisches 1 weiter entfernte Bereitschaftsstellung zurückbewegt (Doppelpfeil 73).

Die so erhaltenen Glasstreifen 9 ohne Randstreifen RX und RY werden durch Bewegen des Förderbandes 11 auf den von den Förderbändern 20 und 21 gebildeten Teil des Brechtisches 1 bewegt, wobei sich zu diesem Zeitpunkt die Einrichtung 30, mit der die Y-Schnitte gebrochen werden (Ritzlinien 5), durch Verstellen auf ihrer Führungsbahn 31 außerhalb des Bereiches der heranzufördernden Glasstreifen 9 befindet.

Nachdem die Glasstreifen 9 mit Hilfe der Einrichtung 30 in Zuschnitte zerteilt worden sind, indem sie entlang der Ritzlinien 5 gebrochen wurden, werden die so erhaltenen Zuschnitte durch entsprechendes Bewegen der Förderbänder 20 (in Förderrichtung 2) und 21 (quer zur Förderrichtung 2) vom Brechtisch 1 abtransportiert und einer weiteren Verwendung zugeführt.

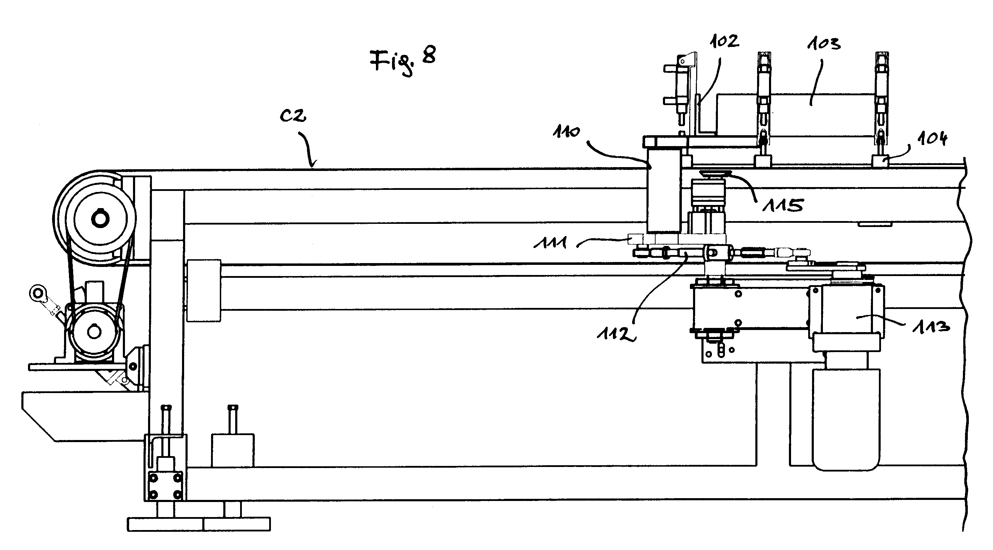

Nachstehend wird mit Bezug auf die Fig. 6 bis 8 als weiteres Ausführungsbeispiel eine Anlage gemäß der Erfindung zum Zerteilen von Glastafeln 3 beschrieben:
Die Glasschneideanlage besteht aus einem Glasschneidetisch A0, dessen Platte als Luftkissentisch ausgebildet ist und in der mehrere in Förderrichtung 2 verlaufende heb- und senkbare Transportbänder 80 vorgesehen sind. Am Glasschneidetisch A0 ist eine übliche Schneidbrücke 81 mit Schneidkopf 82 in Y-Richtung verfahrbar montiert, wobei der Schneidkopf 82 an der Schneidbrücke 81 in X-Richtung verfahren werden kann.

Im Anschluß an den Glasschneidetisch AO ist an einem Ende eines Zwischenraumes 83 zwischen dem abgabeseitigen Ende des Glasschneidetisches A0 und einem Fördertisch A1 mit zwei parallel laufenden Förderbändern entsprechend dem Förderband 10 von Fig. 1 eine Randabbrechvorrichtung RBVH vorgesehen, deren Konstruktion und Funktion der Randabbrechvorrichtung 50 gemäß Fig. 2 entspricht. Diese Randabbrechvorrichtung RBVH dient zum Abbrechen von Randstreifen RX am vorderen und gegebenenfalls auch am hinteren Ende einer Glastafel 3.

Im Bereich des Zwischenraumes 83 ist unter dem Glasschneidetisch A0 und dem Fördertisch A1 eine Auffangwanne (nicht gezeigt) für abgetrennte Randstreifen RX vorgesehen.

Zwischen den Abschnitten A1 und A2 des Fördertisches (entsprechend den Förderbändern 10 und 11 von Fig. 1) ist die Brechleiste 12 mit den hier als Sauger ausgeführten Niederhaltern 13 vorgesehen, um die Glastafel 3 entlang der Ritzlinien 4 in Glasscheiben 9 zu zerteilen (Brechen der X-Schnitte).

Dem Beginn des Fördertisches A2 sind zwei Randabbrechvorrichtungen RBR und RBL zugeordnet, die dazu dienen, Randleisten RY vom rechten und/oder vom linken Rand der Glasstreifen 9 abzutrennen. Die Randabbrechvorrichtungen RBR bzw. RBL besitzen eine Konstruktion und Funktion entsprechend der Randabbrechvorrichtung 60, wie sie in Fig. 3 gezeigt und weiter oben beschrieben worden ist.

Die Förderbänder der Fördertische A1, A2 können so wie die Förderbänder 10 und 11 des Glasbrechtisches 1 von Fig. 1 als Saugförderbänder ausgebildet sein, damit die Glastafel bzw. die Glasstreifen 9 beim Ausführen eines Brechvorganges sicher festgelegt werden können und falls gewünscht, der Transport ohne Verrutschen der Glastafeln 3 bzw. der Glasstreifen 9 gegenüber den Förderbändern erfolgen kann.

Zu beiden Seiten des Fördertisches mit seinen Abschnitten A1 und A2 sind Auffangwannen für Randstreifen vorgesehen, die von der Randabbrechvorrichtung RBR bzw. RBL von Glasstreifen 9 abgetrennt worden sind.

Im Anschluß an die Fördertische A1, A2 ist ein Fördertisch A3 vorgesehen, der dem Fördertisch 20 von Fig. 1 entspricht. Dem bezogen auf die Förderrichtung 2 vorderen Rand des Fördertisches A3 ist eine Einrichtung BRY zum Brechen der Glasstreifen entlang der Ritzlinien 5 (Brechen der Y-Schnitte) zugeordnet, deren Konstruktion und Funktion jener der Brecheinrichtung 30 von Fig. 5 entspricht. In einem Spalt zwischen dem Fördertisch A3 und dem nachgeschalteten Förderband B1, das dem Förderband 21 von Fig. 1 entspricht, ist die der Brecheinrichtung BRY zugeordnete Hebenocke 35 (in Fig. 6 nicht gezeigt) vorgesehen.

Dem abgabeseitigen Ende des Fördertisches B1 ist ein weiterer in zwei Abschnitte C1 und C2 unterteilter Fördertisch 91 vorgesehen, der die Glaszuschnitte zu einer Stelle der Anlage fördert, in welcher die Glaszuschnitte entlang in diesen allenfalls enthaltener, schräg ausgerichteter Ritzlinien geteilt werden können (Brechen der Z-Schnitte). Um den Übergang vom Fördertisch B1 auf den Fördertischabschnitt C2, d.h. den problemlosen Transport der Glaszuschnitte zu gewährleisten, ist der Fördertisch B1 höhenbeweglich ausgebildet und an seinem abgabeseitigen Ende eine mit ihm heb- und senkbare Rolle 90 vorgesehen. Die Vorrichtung zum Brechen der Z-Schnitte, die in Fig. 6 mit BRZ bezeichnet ist, besitzt eine Konstruktion und Funktion wie die Einrichtung BRY bzw. 30 zum Brechen der Y-Schnitte.

Um die in Glaszuschnitten allenfalls vorhandenen Z-Schnitten entsprechenden Ritzlinien gegenüber der Einrichtung BRZ zwischen den Abschnitten C1 und C2 des Fördertisches 91 leicht ausrichten zu können (hiezu müssen die Glaszuschnitte in einer horizontalen Ebene gedreht werden), können die Förderbänder der Abschnitte C1 und C2 als luftdurchlässige Bänder ausgeführt sein, die nicht nur mit Unterdruck, sondern auch mit Überdruck beaufschlagt werden können, so daß sie als Luftkissentische wirken.

Bezogen auf die Förderrichtung nach der Brecheinrichtung BRZ ist noch eine weitere Randabbrecheinrichtung RBZ vorgesehen, mit der Randleisten oder sonstige Reste entlang Z-Schnitten abgebrochen werden können. Diese Randabbrecheinrichtung RBZ besitzt eine Konstruktion, die jener der Randabbrecheinrichtung RBVH bzw. der Randabbrecheinrichtung 50 von Fig. 1 entspricht.

Im Bereich der Unterbrechung zwischen den Abschnitten C1 und C2 des Fördertisches 91 sind am Abschnitt C2 noch mehrere nach unten ausschwenkbare Rollen bzw. Walzen 92 (Rollenfeld) montiert, die nach unten ausgeschwenkt werden, wenn die Randabbrechvorrichtung RBZ betätigt wird, so daß abgetrennte Glasteile in eine zwischen den Abschnitten C1 und C2 des Fördertisches 91 angeordnete Auffangwanne fallen können.

Dem Abschnitt C2 des Fördertisches 91 ist noch eine Vorrichtung 100 zum Verdrehen von Glastafelzuschnitten zugeordnet.

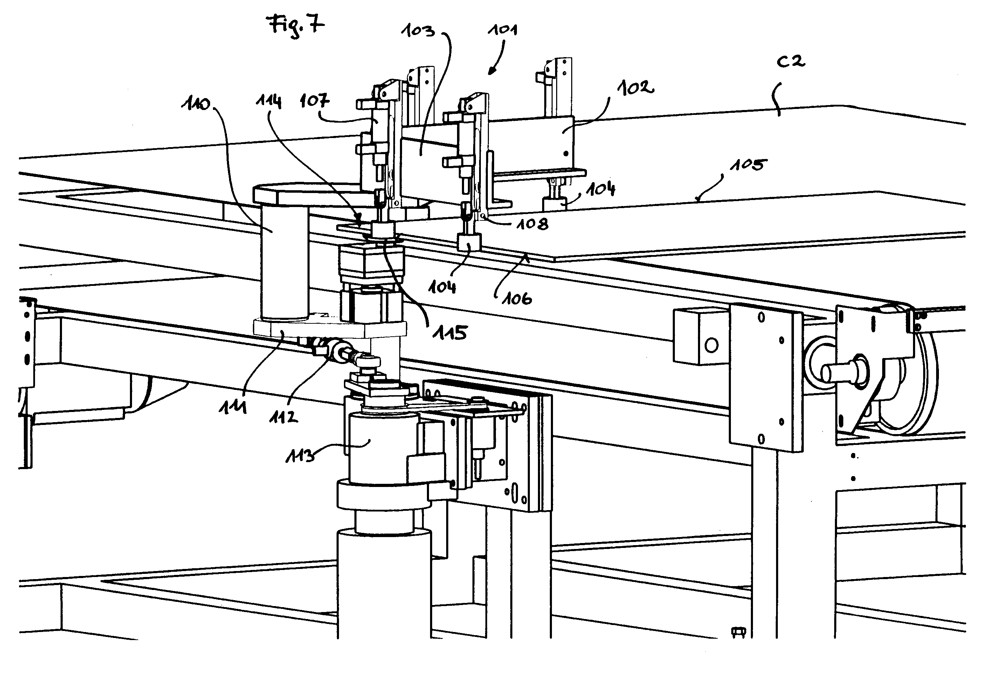

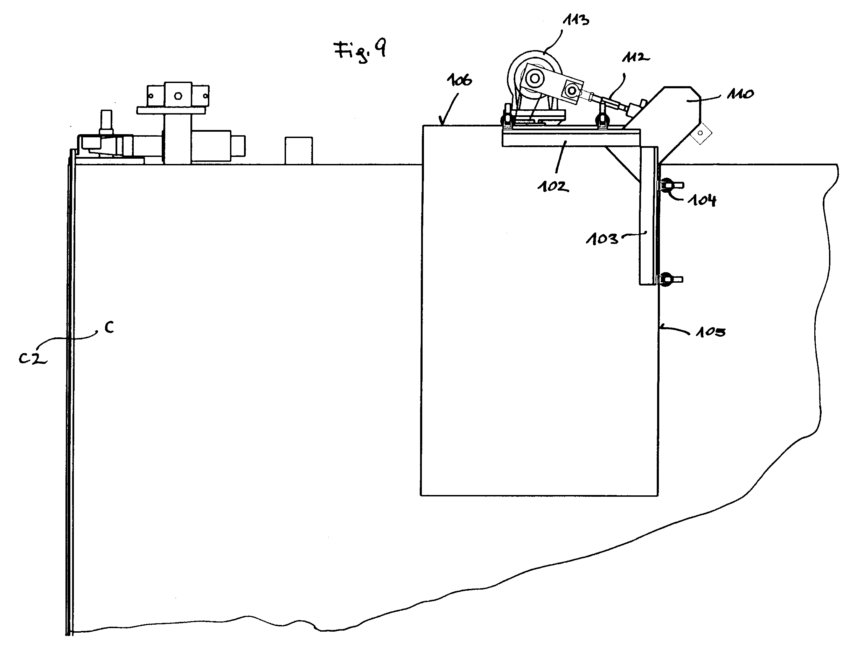

Die Vorrichtung 100 zum Drehen von Glaszuschnitten ist in mehr Einzelheiten in den Fig. 7 bis 9 gezeigt.

Die Vorrichtung 100 zum Drehen von Glaszuschnitten dient dazu, die Glaszuschnitte auf dem Abschnitt C2 des Fördertisches 100 aufliegend so zu drehen, daß sie dem nachgeschalteten Fördertisch D1 (Abgabeförderer) so zugeführt werden, daß sie von einer der Anlage nachgeschalteten Vorrichtung zum Hochkippen und Abstapeln von Glaszuschnitten, wie sie in Fig. 6 schematisch angedeutet ist, und die eine Konstruktion gemäß der EP-A-477 163 haben kann, richtig ausgerichtet zugeführt werden. Dabei ist es bevorzugt, daß die Glaszuschnitte, wenn es sich um kleinere Zuschnitte handelt, vom Abgabeförderer D1 der Stapelvorrichtung mit ihrer längeren Seitenkante voran zugeführt werden. Die Abstapelvorrichtung besitzt eine neben dem abgabeseitigen Ende des Abgabeförderers D1 angeordnete Vorrichtung zum Hochkippen der Glaszuschnitte, die beispielsweise die Konstruktion der Vorrichtung 60 von Fig. 5 und 6 der EP-A-477 163 besitzen kann, dieser nachgeschaltet eine Vorrichtung zum Absenken von Glaszuschnitten mit einer Konstruktion entsprechend der Vorrichtung 70 von Fig. 5 der EP-A-477 163 und im Anschluß an diese einen Fächerwagen, wie er ebenfalls in den Fig. 5 und 6 der EP-A-477 163 (Bezugszeichen 80) dargestellt ist. Wegen weiterer Einzelheiten der Konstruktion und der Arbeitsweise dieser Abstapelvorrichtung wird auf die EP-477 163 verwiesen.

Die Vorrichtung 100 zum Drehen der Glaszuschnitte auf dem Fördertischabschnitt C2 besitzt einen Winkelhebel 101, an dessen Schenkeln 102, 103 je zwei Anschläge 104 vorgesehen sind, die wie aus Fig. 7 ersichtlich, an zwei in einer Ecke zusammenlaufende Ränder 105, 106 eines Glastafelzuschnittes angelegt werden können. Um die Anschläge 104 aus ihrer Wirkstellung gemäß Fig. 7 entfernen zu können, sind sie bzw. ihre Tragearme am Winkelhebel 101 durch Druckmittelmotore 107 um Schwenkachsen 108 hochklappbar.

Der Winkelhebel 101 ist über eine Halterung 110, die im wesentlichen U-förmig ausgebildet ist, um eine zur Stützfläche des Förderbahnabschnittes C2 senkrechte Achse, die im Bereich des einen Randes dieses Förderbandabschnittes C2 angeordnet ist, verschwenkbar im Maschinengestell gelagert. Hiezu greift an einem unteren Abschnitt 111 der Halterung 110 ein Schubarm 112 an, der mit einem Motor 113 gekuppelt ist.

Vorteilhafterweise kann an der Halterung 110 und daher mit dieser verdrehbar, ein an die Unterseite des Glaszuschnittes im Bereich der Ecke 114 derselben, die im Bereich der Schwenkachse liegt, anlegbarer Saugkopf 115 vorgesehen sein. Der Saugkopf 115 dient dazu, die Glaszuschnitte im Bereich seiner Ecke 114 festzuhalten, wenn die vom Winkelhebel 101, dessen Anschläge 104 an den Rändern 105 und 106 des Glaszuschnittes anliegen, gedreht wird. Dabei kann der Förderbahnabschnitt C2, dessen Förderband luftdurchlässig ausgebildet ist, mit Druckluft beaufschlagt werden, so daß der Abschnitt C2 als Luftkissentisch wirkt und die Reibung zwischen dem Förderband und dem Glaszuschnitt während des Drehens desselben verringert wird.

Mit Vorteil ist die Drehvorrichtung 100 gemäß den Fig. 7 bis 9 so angeordnet, daß sich der Saugkopf 115 im Bereich einer seitlich offenen Ausnehmung des Fördertischabschnittes C2 befindet, damit der Glaszuschnitt von diesem möglichst großflächig unterstützt wird, wenn er gedreht wird.

Zusammenfassend kann die Erfindung beispielsweise wie folgt dargstellt werden:
An einem Glasbrechtisch 1 sind eine Hebeleiste 12 zum Brechen geritzter Glastafeln längs in X-Richtung verlaufender Ritzlinien und eine Einrichtung 30 zum Brechen der Glastafeln entlang in Y-Richtung verlaufender Ritzlinien vorgesehen, wobei Förderbänder 10, 11, 20, 21 vorgesehen sind, um die geritzten bzw. teilweise gebrochenen Glastafeln zu den verschiedenen Stellen des Glasbrechtisches 1 zu bewegen.

Zusätzlich sind dem Glasbrechtisch 1 Randabbrechwerkzeuge 50 und 60 zugeordnet, die von der Glastafel außerhalb von Nullinien entsprechenden Ritzlinien befindliche Randstreifen abbrechen, indem sie diese Randstreifen gegenüber der Glastafel verwinden. Dabei wird so vorgegangen, daß zunächst die in X-Richtung verlaufenden Randstreifen von dem Randabbrechwerkzeug 50 abgebrochen werden, bevor die Glastafel entlang der in X-Richtung verlaufenden Ritzlinien gebrochen wird. Dann werden von den einzelnen so erhaltenen Glasstreifen entlang der Nullritzlinien, die in Y-Richtung verlaufen, befindlichen weiteren Randstreifen von Randabbrechwerkzeugen 60 abgebrochen. Erst hernach werden die Glasstreifen entlang der in Y-Richtung verlaufenden Ritzlinien in die gewünschten Glaszuschnitte aufgeteilt und vom Förderband 21 des Glasbrechtisches 1 abtransportiert.

## Patentansprüche

1. Verfahren zum Zerteilen von Glastafeln (3) in Zuschnitte mit der gewünschten Größe mit den folgenden Verfahrensschritten: Ritzen der Glastafeln (3), wobei abgesehen von den die Zuschnitte definierenden Ritzlinien (4, 5) wenigstens zwei zueinander senkrecht stehende Nullschnittritzlinien (6, 7) im Bereich von wenigstens zwei zu einer Ecke (8) zusammenlaufenden Rändern der Glastafel (3) erzeugt werden, Fördern der so geritzten Glastafel (3) auf einen Brechtisch (1), Abbrechen des wenigsten einen Randstreifens (RX) entlang der quer zur Förderrichtung (Y) laufenden Nullschnittlinie (6), Teilen der Glastafel (3) entlang der quer zur Förderrichtung laufenden Ritzlinien (4) (X-Schnitt), gegebenenfalls Weiterfördern der einzelnen so erhaltenen, wenigstens parallel zur Förderrichtung (Y) ausgerichtete Ritzlinien (5) aufweisenden Glasstreifen (9), Abbrechen der wenigstens einen Randleiste (RY) entlang der parallel zur Förderrichtung (Y) verlaufenden Nullschnittlinie (7), Teilen der so erhaltenen Glasstreifen entlang der in Förderrichtung (Y) verlaufenden Ritzlinien (5) (Y-Schnitte), gegebenenfalls nachdem die Glasstreifen zu einem weiteren Abschnitt des Brechtisches (1) bewegt worden sind.

2. Verfahren nach Anspruch 1, dadurch gekennzeichnet, daß man beim Abbrechen der Ränder (RX, RY) entlang der Nullschnittlinien (6, 7) den abzutrennenden Randstreifen (RX, RY) gegenüber dem übrigen Teil der Glastafel (3) bzw. der Glasstreifen (9) verwindet und dabei die Glastafel (3) bzw. die Glasstreifen (9) im Bereich der Nullschnittlinie (6, 7) von unten her abstützt.

3. Verfahren nach Anspruch 2, dadurch gekennzeichnet, daß man stärker verwindet, wenn der abzutrennende Randstreifen (RX, RY) lang ist.

4. Verfahren nach einem der Ansprüche 1 bis 3, dadurch gekennzeichnet, daß man das Zerteilen der Glastafel (3) quer zur Förderrichtung (X-Schnitt) mit Hilfe einer Hebeleiste (12) ausführt, deren obere Kante zur Ebene des Glasbrechtisches (1) schräggestellt ist, wobei man die Glastafel beiderseits der Ritzlinie (4), entlang welcher zu teilen ist, wahlweise von oben durch Niederhalter (14) und/oder unten durch Saugköpfe (13) lediglich an dem Ende niederhält, an dem die Brechleiste (12) höher ist und von dem weg sie abfallend ausgebildet ist.

5. Verfahren nach einem der Ansprüche 1 bis 4, dadurch gekennzeichnet, daß man die Glastafel (3) zum Brechen entlang der in Förderrichtung (Y) verlaufenden Ritzlinien (5) (Y-Schnitt) im Bereich der Ritzlinie (5) von unten her von der Auflagefläche des Brechtisches (1) abhebt und gleichzeitig von oben her beiderseits der Ritzlinie (5) niederdrückt.

6. Verfahren nach Anspruch 5, dadurch gekennzeichnet, daß man die Glastafel (3) auch im Abstand von dem Rand, an dem sie angehoben wird, von der Auflagefläche des Brechtisches (1) abhebt.

7. Verfahren nach Anspruch 5 oder 6, dadurch gekennzeichnet, daß das Anheben der Glastafel (3) von unten her und das Niederhalten (40) der Glastafel (3) von oben her im wesentlichen punkt- oder linienförmig erfolgt.

8. Vorrichtung zum Durchführen des Verfahrens nach einem oder mehreren der Ansprüche 1 bis 7, mit einem (ggf. in mehrere Abschnitte unterteilten) Glasbrechtisch (1) im Anschluß an einen Glasschneidetisch (A0) und mit Fördermitteln zum Transportieren geritzter Glastafeln (3) auf den Glasbrechtisch (1) und mit Einrichtungen zum Teilen der Glastaflen (3) entlang der in (5) Förderrichtung (Y, Pfeil 2) und der quer zur Förderrichtung verlaufenden Ritzlinien (4), wobei ein Randabbrechwerkzeug (50) zum Abtrennen des wenigstens einen Randstreifens (RX) entlang der senkrecht zur Förderrichtung (2) verlaufenden, dem Nullschnitt (A, X-Richtung) entsprechenden Ritzlinie (6) vorgesehen ist, daß an wenigstens einem Längsrand des Glasbrechtisches (1) ein weiteres Randabbrechwerkzeug (60) zum Abtrennen des wenigstens einen Randstreifens (RY) entlang der parallel zur Förderrichtung (2) verlaufenden, dem Nullschnitt (B, Y-Richtung) entsprechenden Ritzlinie (7) vorgesehen ist, daß jedes der Werkzeuge (50, 60) zum Abtrennen der Randstreifen (RX, RY) ein von unten her im Bereich der Ritzlinie (6, 7) an die Glastafel (3) bzw. den Glasstreifen (9) anlegbares Widerlager (58, 68) und zwei von oben her an die Glastafel (3) bzw. den Glasstreifen (9) anlegbare Niederhalter (52, 53; 62, 63) aufweist, und daß der im Bereich des abzutrennenden Randstreifens (RX, RY) anlegbare Niederhalter (53, 63) gegenüber dem anderen Niederhalter (52, 62) des Randabbrechwerkzeuges (50, 60) absenkbar ist, um den abzutrennenden Randstreifen (RX, RY) zu verwinden.

9. Vorrichtung nach Anspruch 8, dadurch gekennzeichnet, daß das Randabbrechwerkzeug (60) zum Abtrennen des Randstreifens (RY) entlang der sich parallel zur Förderrichtung (Y-Richtung) erstreckenden Ritzlinie (7) auf den Glasbrechtisch (1) zu und von diesem weg verstellbar montiert ist.

10. Vorrichtung nach Anspruch 8 oder 9, dadurch gekennzeichnet, daß die Widerlager (58, 68), die von unten her im Bereich der Ritzlinie (6, 7) an die Glastafel (3) bzw. den Glasstreifen (9) anlegbar sind, an in den Randabbrechwerkzeugen (50, 60) verschwenkbar gelagerten Hebeln (59, 69) montiert sind.

11. Vorrichtung nach einem der Ansprüche 8 bis 10, dadurch gekennzeichnet, daß die die Niederhalter (52, 53; 62, 63) tragenden Teile (51, 55; 61, 65) der Randabbrechwerkzeuge (50, 60) zum Absenken des einen Niederhalters (53, 63) verschwenkbar sind.

12. Vorrichtung nach einem der Ansprüche 8 bis 11, dadurch gekennzeichnet, daß das Werkzeug (50) zum Abtrennen des Randstreifens (RX) entlang der der quer zur Förderrichtung (2) verlaufenden Nullinie (A) entsprechenden Ritzlinie (6) in Förderrichtung (2) gesehen vor der Brechleiste (12) des Glasbrechtisches (1) vorgesehen ist, und daß der die Niederhalter (52, 53) tragende Teil (51) des Werkzeuges (50) um eine quer zur Förderrichtung (2) ausgerichtete Achse verschwenkbar ist.

13. Vorrichtung nach einem der Ansprüche 8 bis 12, dadurch gekennzeichnet, daß jedem Randabbrechwerkzeug (50, 60) eine Führungsrolle (49, 49') zugeordnet ist, die zur Führung einer Glastafel (3) bzw. eines Glasstreifens (9) an der Unterseite derselben anliegt.

14. Vorrichtung nach einem der Ansprüche 8 bis 13, dadurch gekennzeichnet, daß die Einrichtung (30) zum Brechen entlang der parallel zur Förderrichtung (2) verlaufenden Ritzlinien (5, Y-Richtung) von oben her auf die Glasstreifen (9) beiderseits der Ritzlinie (5) anlegbare Niederhalter (40), deren Abstand voneinander verstellbar ist, und ein von unten her an die Glasstreifen (9) anlegbares Widerlager (41), das gegebenenfalls auf die Niederhalter (40) zu anhebbar ist, aufweist.

15. Vorrichtung nach Anspruch 14, dadurch gekennzeichnet, daß die Einrichtung (30) zum Brechen entlang der in Förderrichtung verlaufenden Ritzlinien (5, Y-Richtung) in einem quer zur Förderrichtung (2) verlaufenden Schlitz des Brechtisches (1) verfahrbar ist, um die Einrichtung (30) zu den Ritzlinien (5) auszurichten.

16. Vorrichtung nach einem der Ansprüche 8 bis 15, dadurch gekennzeichnet, daß der bezogen auf die Förderrichtung (2) nach der Einrichtung (30) zum Brechen der Glasstreifen (9) entlang der in Förderrichtung (2) verlaufenden Ritzlinien (5) angeordnete Bereich des Brechtisches (1) zwei Endlosförderbänder (20, 21) aufweist, wobei das unmittelbar nach der Einrichtung (30) angeordnete Förderband (20) in Förderrichtung (2) fördert und das daran anschließende Förderband (21) quer zur Förderrichtung (2) fördert.

17. Vorrichtung nach Anspruch 16, dadurch gekennzeichnet, daß nach dem Förderband (20) ein synchron mit der Einrichtung (30) zum Brechen der Glasstreifen (9) entlang der in Förderrichtung (2) verlaufenden Ritzlinien (5) verstellbarer, über die Stützfläche des Förderbandes (20) anhebbarer Nocken (35), der an den Glasstreifen (9) im Bereich der Ritzlinie (5), entlang welcher der Glasstreifen (9) geteilt wird, von unten her anlegbar ist, vorgesehen ist.

18. Vorrichtung nach einem der Ansprüche 8 bis 17, dadurch gekennzeichnet, daß die von oben her auf die Glastafeln (3) bzw. die Glasstreifen (9) anlegbaren Niederhalter (52, 53; 62, 63) der Randabbrechwerkzeuge (50, 60) an deren verschwenkbaren Teilen (55, 65) heb- und senkbar geführt sind.

19. Vorrichtung nach einem der Ansprüche 8 bis 18, dadurch gekennzeichnet, daß der verschwenkbare Teil (55, 65) der Randabbrechwerkzeuge (50, 60) um eine Achse verschwenkbar ist, die im wesentlichen koaxial zur Achse des von unten her im Bereich der Ritzlinie (6, 7) an die Glastafel (3) bzw. den Glasstreifen (9) anlegbaren Widerlagers (58, 68) ausgerichtet ist.

20. Vorrichtung nach einem der Ansprüche 8 bis 19, dadurch gekennzeichnet, daß das Randabbrechwerkzeug (60) zum Abbrechen von Randstreifen (RY) entlang der in Förderrichtung (2) verlaufenden Nullinie (B) entsprechenden Ritzlinie (7), bezogen auf die Förderrichtung (2) nach der Hebeleiste (12) des Glasbrechtisches (1) angeordnet ist.

21. Vorrichtung nach einem der Ansprüche 8 bis 20, gekennzeichnet, daß sowohl die unten auf die Glastafeln (3) bzw. die Glasstreifen (9) anlegbaren Widerlager (58, 68) als auch die von oben her auf die Glastafel (3) bzw. die Glasstreifen (9) anlegbaren Niederhalter (52, 53; 62, 63) der Randabbrechwerkzeuge (50, 60) im wesentlichen zylinderförmige Stäbe aus elastischem Werkstoff sind, die mit einer Kante oder einer Erzeugenden an die Glastafeln (3) bzw. Glasstreifen (9) anlegbar sind.

22. Vorrichtung nach einem der Ansprüche 8 bis 21, dadurch gekennzeichnet, daß an einem weiteren Abschnitt (C1, C2) des Glasbrechtisches, vorzugsweise im Bereich einer Unterbrechung (92) in diesem, eine Einrichtung (BRZ) zum Brechen von Glaszuschnitten entlang von Ritzlinien, die schräg zur Förderrichtung (2) verlaufen (Z-Schnitt) vorgesehen ist.

23. Vorrichtung nach Anspruch 22, dadurch gekennzeichnet, daß im Anschluß an die Einrichtung (BRZ) zum Zerteilen von Glaszuschnitten entlang schräg zur Förderrichtung (2) verlaufender Ritzlinien ein weiteres Randabbrechwerkzeug (RBZ) zum Abbrechen von Randleisten und/oder Glasresten entlang in Z-Richtung verlaufender Schnittlinien vorgesehen ist.

24. Vorrichtung nach Anspruch 22 oder 23, dadurch gekennzeichnet, daß die Einrichtung (BRZ) zum Zerteilen von Glaszuschnitten entlang von Z-Schnitten und das Randabbrechwerkzeug (RBZ) zum Abtrennen von Randleisten und/oder Glasresten entlang von in Z-Richtung verlaufenden Schnitten der selben Unterbrechung (92) im Glasbrechtisch (C1, C2) zugeordnet sind.

25. Vorrichtung nach einem der Ansprüche 22 bis 24, dadurch gekennzeichnet, daß der Glasbrechtisch wenigstens im Bereich (C1, C2) der Einrichtung (BRZ) zum Brechen der Z-Schnitte und des Randabbrechwerkzeuges (RBZ) als wahlweise mit Druckluft und Unterdruck beaufschlagbarer Luftkissentisch ausgebildet ist.

26. Vorrichtung nach einem der Ansprüche 22 bis 25, dadurch gekennzeichnet, daß am auslaufseitigen Ende des Glasbrechtisches vor einem Abförderer (D1) für die Glaszuschnitte eine Vorrichtung (100) zum Drehen der Glaszuschnitte um eine zur Ebene des Glasschneidtisches senkrechte Achse vorgesehen ist.

27. Vorrichtung nach Anspruch 26, dadurch gekennzeichnet, daß der Glasschneidetisch im Bereich (C2) der Drehvorrichtung (100) als mit Druckluft beaufschlagbarer Luftkissentisch ausgebildet ist.

28. Vorrichtung nach Anspruch 26 oder 27, dadurch gekennzeichnet, daß die Vorrichtung (100) zum Drehen von Glaszuschnitten einen um eine zur Ebene des Glasschneidetisches senkrechte Achse, die im Bereich eines Randes des Glasschneidetisches angeordnet ist, verschwenkbaren Hebel (101) aufweist, an dem an wenigstens zwei zueinander senkrecht stehenden Kanten (105, 106) eines Glaszuschnittes anlegbare Anschläge (104) vorgesehen sind.

29. Vorrichtung nach Anspruch 28, dadurch gekennzeichnet, daß der Hebel (101) als Winkelhebel ausgebildet ist.

30. Vorrichtung nach einem der Ansprüche 26 bis 29, dadurch gekennzeichnet, daß die Vorrichtung (100) zum Drehen von Glaszuschnitten eine Einrichtung (115) zum Fixieren der Glaszuschnitte im Bereich der Drehachse der Vorrichtung (100) zum Drehen von Glaszuschnitten aufweist.

31. Vorrichtung nach Anspruch 30, dadurch gekennzeichnet, daß die Einrichtung ein zur Drehachse koaxialer Sauger (115) ist.

32. Vorrichtung nach einem der Ansprüche 28 bis 31, dadurch gekennzeichnet, daß die Anschläge (104) am Hebel (101) der Einrichtung (100) zum Drehen von Glaszuschnitten am Hebel (101) aus einer Bereitschaftslage in eine Lage verschwenkbar sind, in der sie unmittelbar über der Stützfläche des Glasbrechtisches (C2) angeordnet sind.

33. Vorrichtung nach einem der Ansprüche 28 bis 32, dadurch gekennzeichnet, daß an jedem Schenkel des gewinkelt ausgebildeten Hebels (101) je wenigstens zwei Anschläge (104) vorgesehen sind.

## Claims

1. Method of dividing glass sheets (3) into pieces of the desired size, with the following method steps: scribing of the glass sheets (3), at least two zero-cut scribing lines (6, 7) standing vertically to one another being generated, in addition to the scribing lines (4, 5) defining the parts, in the region of at least two edges of the glass sheet (3) coming together at a corner (8); transport of the glass sheets (3) thus scribed to a breaking table (1), breaking off at least one lateral strip (RX) along the zero cut line (6) extending transversely to the direction of transport (Y), division of the glass sheet (3) along the scribing lines (4) extending transversely to the direction of transport (X-cut), if necessary further transport of the individual glass strips (9) thus obtained and having scribing lines (5) aligned parallel to the direction of transport (Y), breaking off of the at least one lateral strip (RY) along the zero cut line (7) extending parallel to the direction of transport (Y), division of the glass strips thus obtained along the scribing lines (5)(Y-cut) extending in the direction of transport (Y), if necessary after the glass strips have been moved to a further section of the breaking table (1).

2. Method according to Claim 1, characterised in that, when the edges (RX, RY) are broken along the zero cut lines (6, 7) the lateral strip (RX, RY) to be separated is twisted relative to the remaining portion of the glass pane (3) or glass strip (9), the glass pane (3) or glass strip (9) being supported from below in the region of the zero cut line (6, 7).

3. Method according to Claim 2, characterised in that the twisting is greater when the lateral strip (RX, RY) to be separated is long.

4. Method according to one of Claims 1 to 3, characterised in that division of the glass pane (3) transversely to the direction of transport (X-cut) is executed with the aid of a lifting bar (12) whose upper edge is obliquely positioned to the plane of the glass breaking table (1), the glass sheet on both sides of the scribing line (4) along which division is to be done, being selectively held down from above by holding-down means (14) and/or from below by suction heads (13) only at the end at which the breaking bar (12) is higher, and away from which it is designed to incline.

5. Method according to one of Claims 1 to 4, characterised in that, for breaking along the scribing lines (5) extending in the direction of transport (Y) (Y-cut), the glass pane (3) is raised in the region of the scribing lines (5) from below from the support surface of the breaking table (1) and is simultaneously pressed down from above on both sides of the scribing line (5).

6. Method according to Claim 5, characterised in that the glass sheet (3) is raised from the support surface of the breaking table (1) also at a distance from the edge at which it is lifted.

7. Method according to claim 5 or 6, characterised in that raising of the glass sheet (3) is effected from below, and the glass sheets (3) are held down from above, substantially at points or linearly.

8. Device for carrying out the method according to one or more of Claims 1 to 7, with a glass breaking table (1) (if necessary subdivided into a plurality of portions) in connection with a glass cutting table (AO), and with conveyor means for transporting scribed glass sheets (3) on to the glass breaking table (1) and with devices for dividing the glass sheets (3) along the scribing lines (5) extending in the direction of transport (Y, arrow 2) and transversely (4) to the direction of transport, there being provided an edge-breaking tool (50) for separating the at least one lateral strip (RX) along the scribing lines (6) extending vertically to the direction of transport (Y) and corresponding to the zero cut (A, X direction), in that on at least one longitudinal edge of the glass breaking table (1) there is provided a further edge-breaking tool (60) for separating at least one lateral strip (RY) along the scribing line (7) extending parallel to the direction of transport (Y) and corresponding to the zero cut (B, Y-direction), in that each of the tools (50, 60) for dividing the lateral strips (RX, RY) has a couniersupport (58, 68) which may be applied from below in the region of the scribing line (6, 7) to the glass sheet (3) or to the glass strip (9), and two holding-down means (52, 53; 62, 63) which may be applied from above to the glass sheet (3) or to the glass strip (9), and in that the holding-down means (53, 63) of the edge-breaking tool (50, 60), which may be applied in the region of the lateral strip (RX, RY) to be broken off, is lowerable relative to the other holding-down means (52, 62), in order to twist the lateral strip (RX, RY) to be broken off.

9. Device according to Claim 8, characterised in that the edge-breaking tool (60) for separating the lateral strip (RY) along the scribing line (7) extending parallel to the direction of transport (Y-direction) is mounted to be displaceable on the glass breaking table (1) towards and away from said glass breaking table (1).

10. Device according to Claim 8 or 9, characterised in that the countersupports (58, 68) which may be applied from below in the region of the scribing lines (6, 7) to the glass pane (3) or the glass strip (9) are mounted on levers (59, 69) pivotally mounted in the edge-breaking tools (50, 60).

11. Device according to one of Claims 8 to 10, characterised in that the portions (51, 55; 61, 65) of the edge-breaking tools (50, 60) supporting the holding-down means (52, 53; 62, 63) are pivotable in order to lower one of the holding-down means (53, 63).

12. Device according to one of Claims 8 to 11, characterised in that the tool (50) for separating the lateral strip (RX) along the scribing line (6) corresponding to the zero line (A) extending transversely to the direction of transport (Y), seen in the direction of transport (Y), is provided before the breaker bar (12) of the glass breaking table (1), and in that the portion (51) of the tool (50) supporting the holding-down means (52, 53) is pivotal about an axis aligned transversely to the direction of transport (Y).

13. Device according to one of Claims 8 to 12, characterised in that there is associated with each edge-breaking tool (50, 60) a guide roller (49, 49') which abuts on the underside of a glass pane (3) or of a glass strip (9) in order to guide these.

14. Device according to one of Claims 8 to 13, characterised in that the device (30) for breaking along the scribing lines (5, Y-direction) extending parallel to the direction of transport (Y) has holding-down means (40) which may be applied from above to the glass strips (9) on both sides of the scribing line (5), the distance apart of said holding-down means (40) being adjustable, also having a countersupport (41) which may be applied from below to the glass strips (9) and which if necessary may be raised towards the holding-down means (40).

15. Device according to Claim 14, characterised in that the device (30) for breaking along the scribing lines (5, Y-direction) extending in the direction of transport is movable in a slot in the breaking table (1) extending transversely to the direction of transport (Y) in order to align the device (30) to the scribing lines (5).

16. Device according to one of Claims 8 to 15, characterised in that the region of the breaking table (1) located relative to the direction of transport (Y) after the device (30) for breaking the glass strips (9) along the scribing lines (5) extending in the direction of transport (Y) has two endless conveyor belts (20, 21); the conveyor belt (20) located directly after the device (30) conveys in the direction of transport (Y), and the conveyor belt (21) subsequent thereto conveys transversely to the direction of transport (Y).

17. Device according to Claim 16, characterised in that there is provided after the conveyor belt (20) a cam (35) displaceable synchronously with the device (30) for breaking the glass strips (9) along the scribing lines (5) extending in the direction of transport (2), and raisable above the support surface of the conveyor belt (20); and said cam (35) may be applied from below to the glass strip (9) in the region of the scribing line (5) along which the glass strip (9) is divided.

18. Device according to one of Claims 8 to 17, characterised in that the holding-down means (52, 53; 62, 63) of the edge-breaking tools (50, 60), and which may be applied from above to the glass panels (3) or the glass strips (9) are guided to be raisable and lowerable on their pivotable portions (55, 65).

19. Device according to one of Claims 8 to 18, characterised in that the pivotable portion (55, 65) of the edge-breaking tools (50, 60) is pivotal about an axis which is aligned to be substantially coaxial to the axis of the countersupport (58, 68) which may be applied from below in the region of the scribing lines (6, 7) to the glass sheet (3) or the glass strip (9).

20. Device according to one of Claims 8 to 19, characterised in that the edge-breaking tool (60) for breaking off lateral strips (RY) along the scribing line (7) corresponding to the zero line (B) extending in the direction of transport (Y), is located relative to the direction of transport (Y) after the lifting bar (12) of the glass breaking table (1).

21. Device according to one of Claims 8 to 20, characterised in that both the countersupport (58, 68) which may be applied from below to the glass sheets (3) or the glass strips (9) and also the holding-down means (52, 53; 62, 63) of the edge-breaking tools (50, 60) which may be applied from above on to the glass sheet (3) or the glass strip (9) are substantially cylindrical rods of resilient material, which may be applied with one edge or one generatrix to the glass sheets (3) or glass strips (9).

22. Device according to one of Claims 8 to 21, characterised in that there is provided on a further portion (C1, C2) of the glass breaking table, preferably in the region of an interruption (92) in the latter, a device (BRZ) for breaking cut glass parts along scribing lines which extend obliquely to the direction of transport (Y) (Z-cut).

23. Device according to claim 22, characterized in that, following the device (BRZ) for dividing cut glass parts along scribing lines extending obliquely to the direction of transport (Y), there is provided a further edge-breaking tool (RBZ) for breaking off lateral strips and/or glass residues along cut lines extending in the Z direction.

24. Device according to claim 22 or 23, characterised in that the device (BRZ) for dividing cut glass portions along Z cuts and the edge-breaking tool (RBZ) for separating lateral strips and/or glass residues along cuts extending in the Z direction, are associated with the same interruption (92) in the glass-breaking table (C1, C2).

25. Device according to one of claims 22 to 24, characterised in that the glass-breaking table, at least in the regions (C1, C2) of the device (BRZ) for breaking the Z cuts, and of the edge-breaking tool (RBZ) is designed as an air-cushion table which may be optionally charged with compressed air and vacuum.

26. Device according to one of claims 22 to 25, characterised in that, at the output end of the glass-breaking table in front of a discharge conveyor (D1) for the cut glass portions, there is provided a device (100) for rotating the cut glass portions about an axis vertical to the plane of the glass-cutting table.

27. Device according to claim 26, characterised in that the glass-cutting table is formed in the region (C2) of the rotating device (100) as an air-cushion table chargeable with compressed air.

28. Device according to claim 26 or 27, characterised in that the device (100) for rotating cut glass portions has a lever (101) pivotal about an axis vertical to the plane of the glass-cutting table, said axis being located in the region of one edge of the glass-cutting table, stop means (104) which may be applied to at least two edges (105, 106) of a cut glass piece, standing vertically to one another, being provided on said lever (101).

29. Device according to claim 28, characterised in that the lever (101) is in the form of an angled lever.

30. Device according to one of claims 26 to 29, characterised in that the device (100) for rotating cut glass pieces has a device (115) for fixing the cut glass pieces in the region of the axis of rotation of the device (100) for rotating cut glass pieces.

31. Device according to claim 30, characterised in that the device is a suction means (115) coaxial with the axis of rotation.

32. Device according to one of claims 28 to 31, characterised in that the stop means (104) on the lever (101) of the device (100) for rotating cut glass pieces are pivotal on lever (101) out of a ready position into a position in which they are located directly above the support surface of the glass-breaking table (C2).

33. Device according to one of claims 28 to 32, characterised in that there are provided on each arm of the angled lever (101) respectively at least two stop means (104).

## Revendications

1. Procédé pour couper des feuilles (3) de verre en panneaux de la taille souhaitée, comprenant les étapes suivantes: rayage de la feuille (3) de verre, en plus des rayures (4, 5) qui délimitent les panneaux, au moins deux rayures (6, 7) dites de coupe zéro mutuellement perpendiculaires étant tracées dans la région d'au moins deux bords de la feuille (3) de verre qui forment un angle (8) entre eux, transport de la feuille (3) de verre ainsi rayée sur une table de rupture (1), cassure d'au moins une bande de bord (Rx) suivant la rayure (6) de coupe zéro qui s'étend transversalement à la direction de transport (Y), séparation de la feuille (3) de verre suivant les rayures (4) qui s'étendent transversalement à la direction de transport (Y) (coupe X), le cas échéant transport des différentes bandes de verre (9) ainsi obtenues et présentant au moins des rayures (5) qui s'étendent parallèlement à la direction de transport (Y), cassure d'au moins une bande de bord (Ry) suivant la rayure (7) de coupe zéro parallèle à la direction de transport (Y), séparation des bandes de verre ainsi obtenues suivant les rayures (5) qui s'étendent dans la direction de transport (Y) (coupe Y), le cas échéant après déplacement des bandes de verre vers une autre zone de la table de rupture (1).

2. Procédé selon la revendication 1, caractérisé par le fait que lors de la cassure des bords (Rx, Ry) suivant les rayures (6, 7) de coupe zéro, on soumet la bande de bord (Rx, Ry) à séparer à une torsion par rapport au reste de la feuille (3) ou de la bande (9) de verre et ce faisant on soutient par le dessous la feuille (3) ou de la bande (9) de verre dans la région des rayures (6, 7) de coupe zéro.

3. Procédé selon la revendication 2, caractérisé par le fait que l'on applique une torsion plus forte lorsque la bande de bord (Rx, Ry) à séparer est longue.

4. Procédé selon l'une des revendications 1 à 3, caractérisé par le fait que l'on réalise la rupture de la feuille de verre (3) transversalement à la direction de transport (coupe X) au moyen d'une règle (12) de levage dont le bord supérieur est incliné par rapport au plan de la table de rupture (1), la feuille de verre étant tirée vers le bas, de part et d'autre de la rayure (4) suivant laquelle la rupture doit être opérée, uniquement à l'extrémité plus haute de la règlede rupture (12), à partir de laquelle ladite règle présente une pente descendante, de manière sélective par le dessus, au moyen d'éléments presseurs (14), et/ou par le dessous, au moyen de ventouses (12).

5. Procédé selon l'une des revendications 1 à 4, caractérisé par le fait que, pour opérer une cassure suivant les rayures (5) qui s'étendent dans la direction de transport (Y) (coupe Y), on soulève la feuille de verre (3) de la surface de pose de la table de rupture (1), par le dessous, dans la région de la rayure (5) et simultanément, on applique une pression par le dessus, de part et d'autre de la rayure (5).

6. Procédé selon la revendication 5, caractérisé par le fait que l'on décolle la feuille de verre (3) de la surface de pose de la table de rupture (1) également à distance du bord où ladite feuille est soulevée.

7. Procédé selon la revendication 5 ou la revendication 6, caractérisé par le fait que l'on soulève la feuille de verre (3) par le dessous et on applique une pression (40) sur celle-ci par le dessus essentiellement de manière ponctuelle ou suivant une ligne.

8. Dispositif pour la mise en oeuvre du procédé selon une ou plusieurs des revendications 1 à 7, comprenant une table de rupture (1) (éventuellement divisée en plusieurs zones) disposée à la suite d'une table (A0) de coupe du verre, des moyens de transport pour amener les feuilles de verre (3) rayées sur la table de rupture (1) et des dispositifs pour séparer les feuilles de verre (3) suivant les rayures (5) qui s'étendent dans la direction de transport (Y, flèche 2) et transversalement à celle-ci (rayures 4), dispositif dans lequel il est prévu un outil (50) de rupture du bord pour casser la bande de bord (Rx) au nombre d'au moins une suivant la rayure (6) perpendiculaire à la direction de transport (2) correspondant à la coupe zéro (A, direction X), dans lequel il est prévu, sur au moins un bord longitudinal de la table de rupture (1) un outil (60) supplémentaire pour séparer la bande de bord (Ry) au nombre d'au moins une suivant la rayure (7) parallèle à la direction de transport (2) et correspondant à la direction rayure de coupe zéro (B, direction Y), dans lequel chacun des outils (50, 60) pour casser la bande de bande (Rx, Ry) comporte un contre-appui (58, 68) qui est appliqué par le dessous contre la feuille (3) ou la bande (9) de verre, dans la région de la rayure (6, 7), et deux dispositifs presseurs (52, 53; 62, 63) qui sont appliqués par le dessus sur la feuille (3) ou la bande (9) de verre et dans lequel l'élément presseur (53, 63) appliqué dans la région de la bande de bord (Rx, Ry) à casser peut être abaissé par rapport à l'autre élément presseur (52, 62) de l'outil (50, 60) de rupture du bord, aux fins d'imprimer une torsion à la bande de bord (Rx, Ry) à séparer.

9. Dispositif selon la revendication 8, caractérisé par le fait que l'outil (60) de rupture de la bande de bord (Ry) suivant la rayure (7)qui s'étend dans la direction de transport (direction Y) est monté avec possibilité de déplacement en direction de la table de rupture (1) et dans la direction opposée à celle-ci.

10. Dispositif selon la revendication 8 ou la revendication 9, caractérisé par le fait que les contre-appuis (58, 68) qui peuvent être appliqués par le dessous contre la feuille (3) ou la bande (9) de verre, dans la région de la rayure (6, 7), sont montés sur des leviers (59, 69) qui pivotent dans les outils (50, 60) de rupture du bord.

11. Dispositif selon l'une des revendications 8 à 10, caractérisé par le fait que les éléments (51, 55; 61, 65) portant les éléments presseurs (52, 53; 62, 63) des outils (50, 60) de rupture des bords peuvent pivoter pour abaisser l'un des éléments presseurs (53; 63).

12. Dispositif selon l'une des revendications 8 à 11, caractérisé par le fait que l'outil (50) de rupture de la bande de bord (Rx), suivant la rayure (6) correspondant à la ligne de coupe zéro (A) transversale à la direction de transport (2), vu dans la direction de transport (2), est disposé en amont de la règle de rupture (12) de la table de rupture (1) et par le fait que l'élément (51) de l'outil (50) portant les éléments presseurs (52, 53) peut pivoter autour d'un axe orienté transversalement à la direction de transport (2).

13. Dispositif selon l'une des revendications 8 à 12, caractérisé par le fait qu'un galet de guidage (49, 49') est associé à chaque outil (50, 60) de rupture du bord, galet qui est appliqué contre la face inférieure d'une feuille (3) ou d'une bande (9) de verre aux fins de guider celle-ci.

14. Dispositif selon l'une des revendications 8 à 13, caractérisé par le fait que le dispositif (30) pour casser la feuille de verre suivant les rayures (5, direction Y) parallèles à la direction de transport (2) comporte des éléments presseurs (40) qui sont appliqués par le dessus sur la bande (9) de verre, de part et d'autre de la rayure (5), et dont l'écartement est réglable ainsi qu'un contre-appui (41) qui est appliqué par le dessous contre la bande (9) de verre et le cas échéant peut être soulevé en direction des éléments presseurs (40).

15. Dispositif selon la revendication 14, caractérisé par le fait que le dispositif (30) pour rompre la feuille de verre suivant la rayure (5, direction Y) qui s'étend dans la direction de transport (2) peut être déplacé à l'intérieur d'une fente de la table de rupture (1) qui s'étend transversalement à la direction de transport (2).

16. Dispositif selon l'une des revendications 8 à 15, caractérisé par le fait que la zone de la table de rupture (1) disposée le long des rayures (5) qui s'étendent dans la direction de transport (2), après le dispositif (30) de rupture de la bande de verre (9), par rapport à la direction de transport (2), comporte deux bandes transporteuses (20, 21) sans fin, la bande transporteuse (20) disposée immédiatement derrière le dispositif (30) assurant le transport dans la direction de transport (2) et la bande transporteuse (21) qui lui fait suite assurant le transport transversalement à la direction de transport (2).

17. Dispositif selon la revendication 16, caractérisé par le fait qu'il est prévu, derrière la bande transporteuse (20), une came (35) réglable qui peut être amenée en saillie par rapport a la surface d'appui de la bande transporteuse (20), en synchronisme avec le dispositif (30) de rupture de la bande de verre (9) suivant des rayures (5) s'étendant dans la direction de transport (2), laquelle came est appliquée par le dessous contre la bande de verre (9), dans la région de la rayure (5) suivant laquelle la bande de verre (9) doit être coupée.

18. Dispositif selon l'une des revendications 8 à 17, caractérisé par le fait que les éléments presseurs (52, 53; 62, 63) des outils (50, 60) de rupture des bords appliqués par le dessus sur les feuilles (3) ou les bandes (9) de verre sont guidés avec possibilité de déplacement vers le haut et vers le bas sur les éléments pivotants (55, 65) desits outils.

19. Dispositif selon l'une des revendications 8 à 18, caractérisé par le fait que l'élément (55, 65) pivotant des outils (50, 60) de rupture du bord peut pivoter autour d'un axe qui est sensiblement coaxial avec l'axe du contre-appui (58, 68) appliqué par le dessous contre la feuille (3) ou la bande (9) de verre, dans la région de la rayure (6, 7).

20. Dispositif selon l'une des revendications 8 à 19, caractérisé par le fait que l'outil (60) pour rompre les bandes de bord (Ry) suivant la rayure (7) qui s'étend dans la direction de transport (2) et correspond à la ligne de coupe zéro (B) est disposé derrière la règle (12) de levage de la table de rupture (1) par rapport à la direction de transport (2).

21. Dispositif selon l'une des revendications 8 à 20, caractérisé par le fait que les contre-appuis (58, 68) appliqués par le dessous contre les feuilles (3) ou les bandes (9) de verre ainsi que les éléments presseurs (52, 53; 62, 63) des outils (50, 60) de rupture des bords appliqués par le dessus sur la feuille (3) ou les bandes (9) de verre sont des barreaux sensiblement cylindriques en matériau élastique qui, par une arête ou par une génératrice, sont appliqués contre les feuilles (3) ou les bandes (9) de verre.

22. Dispositif selon l'une des revendications 8 à 21, caractérisé par le fait qu'il est prévu dans une autre zone (C1, C2) de la table de rupture, de préférence dans la région d'une discontinuité (92) dans celle-ci, un dispositif (BRZ) pour rompre des panneaux de verre suivant des rayures s'étendant en biais par rapport à la direction de transport (2) (coupes Z).

23. Dispositif selon la revendication 22, caractérisé par le fait qu'il est prévu, à la suite du dispositif (BRZ) pour séparer des panneaux de verre suivant des rayures qui s'étendent en biais par rapport à la direction de transport (2), un outil (RBZ) supplémentaire de rupture de bandes de bord et/ou de restes de verre suivant des rayures s'étendant dans la direction Z.

24. Dispositif selon la revendication 22 ou la revendication 23, caractérisé par le fait que le dispositif (BRZ) pour séparer des panneaux suivant la coupe Z et l'outil (RBZ) supplémentaire de rupture des bandes de bord et/ou des restes de verre suivant des rayures qui s'étendent dans la direction Z sont associés à la même discontinuité (92) dans la table de rupture (C1, C2).

25. Dispositif selon l'une des revendications 22 à 24, caractérisé par le fait qu'au moins dans la zone (C1, C2) du dispositif (BRZ) pour rompre les coupes Z et de l'outil (RBZ) de rupture des bandes de bord et/ou des restes de verre, la table de rupture est agencée sous forme de table à coussin d'air à laquelle peut appliquée de manière sélective une pression d'air positive ou négative.

26. Dispositif selon l'une des revendications 22 à 25, caractérisé par le fait qu'il est prévu à l'extrémité côté sortie de la table de rupture, avant un transporteur de sortie (D1) pour les panneaux découpés, un dispositif (100) pour tourner les panneaux de verre autour d'un axe perpendiculaire au plan de la table de coupe.

27. Dispositif selon la revendication 26, caractérisé par le fait que, dans la zone (C2) du dispositif (100) pour tourner les panneaux, la table de coupe du verre est agencée sous forme de table à coussin d'air alimentée en air comprimé.

28. Dispositif selon la revendication 26 ou la revendication 27, caractérisé par le fait que le dispositif (100) pour tourner les panneaux de verre comporte un levier (101) pivotant qui est monté sur un axe perpendiculaire au plan de la table de coupe, est disposé dans la région d'un bord de ladite table de coupe et sur lequel il est prévu des butées (104) qui sont appliquées sur au moins deux bords (105, 106) mutuellement perpendiculaires d'un panneau de verre.

29. Dispositif selon la revendication 28, caractérisé par le fait que le levier (101) est agencé sous forme de levier coudé.

30. Dispositif selon l'une des revendications 26 à 29, caractérisé par le fait que le dispositif (100) pour tourner les panneaux de verre comporte une dispositif (115) pour fixer le panneau de verre dans la région de l'axe de rotation du dispositif (100) pour tourner les panneaux de verre.

31. Dispositif selon la revendication 30, caractérisé par le fait que le dispositif est une ventouse (115) coaxiale à l'axe de rotation.

32. Dispositif selon l'une des revendications 28 à 31, caractérisé par le fait que les butées (104) sur le levier (101) du dispositif (100) pour tourner les panneaux peuvent pivoter sur ledit levier (101) depuis une position d'attente dans une position dans laquelle elles se trouvent directement au-dessus de la surface d'appui de la table de rupture (C2).

33. Dispositif selon l'une des revendications 28 à 32, caractérisé par le fait qu'il est prévu au moins deux butées (104) sur chaque bras du levier (101) coudé.
